(19) Europäisches Patentamt
European Patent Office
Office européen des brevets

(11) **EP 2 246 760 B1**

(12) **EUROPÄISCHE PATENTSCHRIFT**

(45) Veröffentlichungstag und Bekanntmachung des Hinweises auf die Patenterteilung:
**05.10.2016 Patentblatt 2016/40**

(51) Int Cl.:
**G05B 19/416** (2006.01)     **G05B 13/04** (2006.01)
**B65H 23/188** (2006.01)

(21) Anmeldenummer: **10004478.3**

(22) Anmeldetag: **28.04.2010**

(54) **Verfahren zur Bestimmung wenigstens eines Reglerparameters eines Regelglieds in einem Bahnspannungs-Regelkreis für eine Bearbeitungsmaschine**

Method for determining at least one regulating parameter of a controlling element in a web tension regulating circuit for a processing machine

Procédé de détermination d'au moins un paramètre de réglage d'une articulation de réglage dans un circuit de réglage de tension de bande pour une machine de traitement

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.04.2009 DE 102009019624**

(43) Veröffentlichungstag der Anmeldung:
**03.11.2010 Patentblatt 2010/44**

(73) Patentinhaber: **Robert Bosch GmbH**
**70469 Stuttgart (DE)**

(72) Erfinder:
• **Schultze, Stephan**
**97816 Lohr (DE)**
• **Schnabel, Holger**
**97209 Veitshöchheim (DE)**
• **Goeb, Mario**
**97080 Würzburg (DE)**

(74) Vertreter: **Thürer, Andreas**
**Bosch Rexroth AG**
**BR/IPR**
**Zum Eisengiesser 1**
**97816 Lohr am Main (DE)**

(56) Entgegenhaltungen:
EP-A1- 0 018 555          EP-A2- 1 790 601
WO-A1-98/26335          DE-A1- 4 425 355
DE-A1-102007 005 792   DE-A1-102007 049 670

EP 2 246 760 B1

**Beschreibung**

Die vorliegende Erfindung betrifft ein Verfahren zur Bestimmung wenigstens eines Reglerparameters eines Regelglieds in einem Bahnspannungs-Regelkreis für eine Bearbeitungsmaschine, eine entsprechend eingerichtete Recheneinheit, ein entsprechendes Computerprogramm sowie ein entsprechendes Computerprogrammprodukt.

Obwohl nachfolgend hauptsächlich auf Druckmaschinen Bezug genommen wird, ist die Erfindung nicht darauf beschränkt, sondern vielmehr auf alle Arten von Bearbeitungsmaschinen gerichtet, bei denen eine Warenbahn bzw. Materialbahn bearbeitet wird. Die Erfindung ist aber insbesondere bei Druckmaschinen wie z.B. Zeitungsdruckmaschinen, Akzidenzdruckmaschinen, Tiefdruckmaschinen, Verpackungsdruckmaschinen oder Wertpapierdruckmaschinen sowie bei Bearbeitungsmaschinen wie z.B. Beutelmaschinen, Briefumschlagsmaschinen oder Verpackungsmaschinen einsetzbar. Die Warenbahn kann aus Papier, Stoff, Pappe, Kunststoff, Metall, Gummi, in Folienform usw. ausgebildet sein.

Bei betreffenden Bearbeitungsmaschinen, insbesondere Druckmaschinen, wird eine Warenbahn entlang von angetriebenen Achsen (Bahntransportachsen bzw. einrichtungen) wie z.B. Zugwalzen oder Vorschubwalzen und nicht angetriebenen Achsen wie z.B. Umlenk-, Leit-, Trocknungs- oder Kühlwalzen bewegt. Die Warenbahn wird gleichzeitig mittels meist ebenfalls angetriebener Bearbeitungsachsen bearbeitet, bspw. bedruckt, gestanzt, geschnitten, gefalzt usw. Die angetriebenen Achsen beeinflussen, sowohl die Bahnspannung als auch das Bearbeitungsregister, bspw. ein Farb- oder Längsregister.

Bei Druckmaschinen wird neben bspw. einem Längs- und/oder Seitenregister oft auch die Bahnspannung geregelt, um ein optimales Druckergebnis zu erzielen. Bekannte Regler, wie z.B. P-Regler, D-Regler, I-Regler usw. sowie beliebige Kombinationen davon, beinhalten Reglerparameter, die eingestellt werden müssen. Übliche Reglerparameter sind die Proportionalverstärkung $K_p$, die Integralverstärkung $K_I$, die Differentialverstärkung $K_D$, die Nachstellzeit $T_N$, die Vorhaltezeit $T_v$, Verzögerungen $T$ usw.

Stand der Technik

Die Reglerparameter werden im Stand der Technik manuell bspw. über eine Auswertung einer Sprungantwort ermittelt bzw. eingestellt. Hierzu wird die Führungsgröße verändert und das Systemverhalten auf diese Sollwertänderung hin untersucht bzw. optimiert. Daraufhin werden beispielsweise von einem Maschinenbediener die Reglerparameter verändert, weshalb er regelungstechnische Kenntnisse besitzen und die Parameter einzeln einstellen muss. Ein bekanntes Parametrierverfahren bedient sich z.B. der Ziegler-Nichols-Einstellregeln.

Sind die Art der Regelstrecke und ihre Streckenparameter bekannt, ist neben der manuellen Parametrierung auch eine berechnete Parametrierung möglich. Hierzu ist es nötig, den betrachteten Regelkreis zu modellieren. Die Regelkreisstruktur besteht zumindest aus den beiden Elementen Regler und Regelstrecke (Streckenverhalten). Das Streckenverhalten einer Stellbewegung beispielsweise eines Druckwerks wird dabei üblicherweise als PT1-Glied mit einer geschwindigkeitsabhängigen Verzögerungszeit $T(v)_s$ modelliert. Regelungstechnisch wird das Streckenverhalten üblicherweise mit Hilfe eines PI-Reglers derart ausgelegt, dass sich der offene Regelkreis zu einem System zweiter Ordnung ergibt. Hierbei gibt es verschiedene Auslegungskriterien für die P-Verstärkung und den I-Anteil.

Die Zeitkonstante der Regelstrecke $T(v)_s$ ist proportional zu der Warenbahnlänge des zu regelnden Bahnspannungsabschnitts zwischen zwei Klemmstellen und umgekehrt proportional zur Warenbahngeschwindigkeit v. Die Abschnittslänge bleibt dabei typischerweise während einer Produktion konstant und ändert sich nur bei Produktionsumstellungen und kann ggf. als Konstante angenommen werden. Somit ergibt sich eine Vereinfachung, indem die Streckenzeitkonstante nur proportional zu 1/v angenommen wird. Mit dieser geschwindigkeitsabhängigen Zeitkonstante werden im Stand der Technik die Reglerparameter adaptiert. Verwendung finden dabei bekannte Einstellverfahren wie z.B. Symmetrisches Optimum oder Wurzelortskurvenverfahren.

Die Eigenschaften der Regelstrecke hängen auch von den physikalischen Parametern der Warenbahn ab. In der DE 103 45 593 A1 ist dargestellt, dass ermittelte Elastizitätsmodule der Warenbahn zur Reglerparametrierung genutzt werden können. Die DE 36 05 168 A1 zeigt, wie Reglerparameter eines PI-Regleres an die physikalischen Parameter Bahnquerschnitt und E-Modul der Warenbahn angepasst werden können.

In der EP 1 790 601 A2 ist dargestellt, dass Reglerparameter in Abhängigkeit von Warenbahnparametern (z.B. E-Modul), Maschinenparametern (z.B. Warenbahnlänge, Warenbahngeschwindigkeit oder Trägheitsmoment) und Betriebsparametern (z.B. Regelabweichung) bestimmt werden können.

In der nicht vorveröffentlichten DE 10 2008 035 639 ist dargestellt, dass neben diesen Größen auch Totzeiten in der Regelstrecke vorhanden sind und zur Ermittlung der Reglerparameter herangezogen werden können.

Aus der DE 10 2007 049 670 A1 ist ein Verfahren zur Bestimmung eines Reglerparameters in einem Bahnspannungs-Regelkreis für eine Bearbeitungsmaschine zur Bearbeitung einer Warenbahn bekannt. Die Bahnspannung wird dabei mittels eines Regelglieds in Form eines Kompensators beeinflusst. Bei der Einstellung der Reglerparameter werden die Bearbeitungsmaschine kennzeichnende Parameter, nämlich die Transportgeschwindigkeit und die Länge der Warenbahn in einem Warenbahnabschnitt, berücksichtigt.

Die bekannten Verfahren weisen den Nachteil auf, dass einerseits die Reglerparameter manuell eingegeben werden müssen, was üblicherweise nicht zu einer optimalen Regelung führt, und andererseits die verfahren zur automatischen Adaption noch nicht so ausgereift sind, dass optimale Ergebnisse, insbesondere im Hinblick auf das Störverhalten, erzielt werden. Auch ist eine Anpassung der einmal ermittelten Parameter an neue Bedingungen mit einer Wiederholung des Verfahrens verbunden und somit ebenfalls relativ zeitaufwendig.

Vor diesem Hintergrund werden mit der vorliegenden Erfindung ein Verfahren zur Bestimmung wenigstens eines Reglerparameters eines Regelglieds in einem Bahnspannungs-Regelkreis für eine Bearbeitungsmaschine sowie eine Recheneinheit zur Durchführung des Verfahrens mit den Merkmalen der unabhängigen Patentansprüche vorgeschlagen. Vorteilhafte Weiterbildungen sind Gegenstand der Unteransprüche sowie der nachfolgenden Beschreibung.

Bei dem erfindungsgemäßen Verfahren wird der wenigstens eine Reglerparameter, bspw. die Proportionalverstärkung $K_P$ und/oder die Nachstellzeit $T_N$ eines PI-Glieds, in Abhängigkeit von wenigstens einem die Warenbahn kennzeichnenden Parameter, wie z.B. dem Elastizitätsmodul und/oder dem Querschnitt, wenigstens einem die Bearbeitungsmaschine kennzeichnenden Parameter, wie z.B. der Bahngeschwindigkeit und/oder der Abschnittslänge, und wenigstens einer, insbesondere konstanten (d.h. nicht bahngeschwindigkeitsabhängigen) und/oder geschwindigkeitsabhängigen, Totzeit, wie z.B. einer Übertragungszeit und/oder einer Messzeit, bestimmt. Die Bestimmung findet zweckmäßigerweise auch mehrfach oder zyklisch während der Regeltätigkeit bzw. des Betriebs der Bearbeitungsmaschine statt, um den wenigstens einen Reglerparameter stetig an die herrschenden Bedingungen anzupassen (sog. Adaption).

Die Erfindung kombiniert somit erstmalig die Berücksichtigung von Warenbahnparametern, Maschinenparametern und Zeitparametern. Erfindungsgemäß werden zusätzlich zu dem üblicherweise mittels eines Quotienten aus Abschnittslänge und Warenbahngeschwindigkeit modellierten Streckenverhaltens, welches durch eine bahngeschwindigkeitsabhängige Verzögerungszeit $T(v)_s$ gekennzeichnet ist, auch wenigstens eine Totzeit sowie wenigstens ein Warenbahnparameter bei der Bestimmung des wenigstens einen Reglerparameters berücksichtigt. Eine bevorzugte Möglichkeit zur Berücksichtigung von Totzeiten wird in der DE 10 2008 035 639 ("Verfahren zur Modellierung eines Regelkreises für eine Bearbeitungsmaschine") derselben Anmelderin offenbart, auf die an dieser Stelle ausdrücklich verwiesen wird. Ein Fachmann kann der DE 10 2008 035 639 Anweisungen im Hinblick darauf entnehmen, wie Totzeiten bei einer Reglerparametrierung berücksichtigt werden können.

Vorteile der Erfindung

Durch die erfindungsgemäße Lösung können eine im Vergleich zum Stand der Technik optimierte Modellierung des einer Bearbeitungsmaschine zugrunde liegenden Bahnspannungs-Regelkreises erreicht und basierend darauf Reglerparameter bestimmt werden. Durch die erfindungsgemäße Kombination der Berücksichtigung von sowohl Maschinenparametern als auch Warenbahnparametern und konstanten und/oder geschwindigkeitsabhängigen Totzeiten können in vielen Bereichen gute Ergebnisse erzielt werden. Beispielsweise hat eine geschwindigkeitsabhängige Totzeit üblicherweise bei niedrigen Geschwindigkeiten einen großen Einfluss, der mit ansteigender Warenbahngeschwindigkeit abnimmt. Gerade aber in diesem Geschwindigkeitsbereich wirkt sich der Einfluss von konstanten Totzeiten besonders störend aus, da diese definitionsgemäß keine Geschwindigkeitsabhängigkeit zeigen und somit in diesen Geschwindigkeitsbereichen das Streckenverhalten dominieren können. Daneben beeinflussen auch die Warenbahnparameter, wie z.B. Elastizitätsmodul, Querschnitt (Dicke und Breite) oder Grammatur, die Reaktion der Regelstrecke auf einen Stellvorgang, weshalb eine Berücksichtigung dieser Parameter die Regelung weiter verbessert. Der unter Berücksichtigung dieser Größen modellierte Regelkreis kann herangezogen werden, um mittels üblicher Verfahren die Reglerparameter automatisch zu bestimmen. Die Reglerparameter sind somit optimal auf die zugrunde liegende Bearbeitungsmaschine abgestimmt und eine manuelle Eingabe durch einen Anwender kann entfallen. Damit wird eine signifikante Fehlerquelle bei der Maschineneinrichtung ausgeschlossen.

Einige der in die Bestimmung eingehenden Parameter, wie z.B. E-Modul oder Abschnittslängen, können sich während des Bearbeitungsprozesses ändern. Es ist daher zweckmäßig, wenn die Bestimmung während des Bearbeitungsprozesses regelmäßig oder ausgelöst durch eine Veränderung durchgeführt wird. Diese Bestimmung kann insbesondere automatisch innerhalb einer Recheneinheit, wie z.B. einem Steuergerät bzw. einem Bahnspannungsregler, erfolgen. Mit dieser bevorzugten Ausgestaltung der Erfindung ist es somit möglich, zu jedem Zeitpunkt einer Bearbeitung eine optimale Parametrierung der Regler automatisch bereitzustellen.

Es ist vorteilhaft, dass der wenigstens eine Reglerparameter in Abhängigkeit von einem vorgebbaren Gewichtungsfaktor bestimmt wird. Oft erweisen sich Reglerparameter, die durch eine theoretische Auslegung berechnet werden, in der Praxis als nicht optimal. Als Gründe hierfür können zusätzliche, nicht ermittelbare Verzögerungszeiten, Nichtlinearitäten, Signalrauschen, falsch bestimmte Streckenparameter oder die Regelgüte bzw. das Bahnspannungsverhalten im konstanten Lauf angeführt werden. Insbesondere der letzte Punkt ist meist nachteilig. Zwar schwingt der Regelkreis schnell ein, im Konstantlauf ergibt sich aber aufgrund der Diskretisierung bzw. Quantisierung der Messergebnisse bzw. Stellgrößen oft eine Unruhe aufgrund eines relativ "kräftigen" Proportionalanteils. Vorzugsweise wird ein Verfahren vorgeschlagen, bei dem als weitere Eingangsgröße ein Gewichtungsfaktor z.B. als Maß für eine "Reglerschärfe" angegeben wird. Beispielsweise können eine oder alle theoretisch ermittelten Reglerparameter mit dem Gewichtungsfaktor (z.B. zwischen 0 und 1, aber auch größer 1) multipliziert werden. Mit Hilfe dieses Eingangsparameters kann der Anwender bei Bedarf die Reglerparameter anpassen. Beispielhaft könnte dies bei einem PI-Regelglied dadurch erreicht werden, dass die Proportionalverstärkung mit diesem prozentualen Faktor multipliziert wird. Alternativ kann neben einem Gewichtungsfaktor auch eine Auswahl aus vordefinierten Werten auswählbar sein (z.B. 20%, 40%, 50%, 60%, 70%, 80%, 85%, 90%, 95%, 100%, 105%,...).

Vorteilhafterweise wird ein Wert für wenigstens einen die Warenbahn kennzeichnenden Parameter, wie z.B. der E-Modul, einer Datenbank entnommen. Die meisten Kenngrößen, wie z.B. Geschwindigkeit, Länge (z.B. Materialbahnlänge zwischen den Bearbeitungseinheiten), Totzeiten oder Warenbahnmaße, sind üblicherweise bekannt. Hingegen ist der E-Modul bzw. die Spannungs-Dehnungs-Charakteristik meist unbekannt. Es wird vorgeschlagen, eine Datenbank mit E-Modulwerten von typischen Warenbahnsorten vorzusehen, so dass der Anwender bspw. nur noch das Material der Warenbahn anzugeben braucht. Es kann vorgesehen sein, dass die Datenbank - vergleichbar einer Rezepturverwaltung - um vom Anwender ermittelte Werte erweiterbar ist. Zusätzlich vorteilhaft kann der Wert für den wenigstens einen die Warenbahn kennzeichnenden Parameter in Abhängigkeit von Umgebungsparametern (z.B. Temperatur und Feuchte der Warenbahn) oder von anderen Größen hinterlegt sein. Eine Bestimmung des E-Moduls der Warenbahn wird z.B. in der DE 102 25 824 A1 oder der DE 103 22 098 A1 offenbart, auf die bezüglich weiterer Einzelheiten an dieser Stelle verwiesen sei.

Ebenso vorteilhaft ist, wenn alternativ oder zusätzlich ein Wert für wenigstens einen die Warenbahn kennzeichnenden Parameter, wie z.B. der E-Modul, und/oder wenigstens einen die Bearbeitungsmaschine kennzeichnenden Parameter, wie z.B. die Bahnlänge, gemessen, geschätzt oder mittels regelungstechnischer Beobachtung bestimmt wird. Bspw. kann eine Veränderung des E-Moduls durch Temperatur- und/oder Feuchteveränderungen hervorgerufen werden. Die Bahnlänge eines Bahnspannungsabschnitts ändert sich beispielsweise durch das Öffnen oder Schließen einer begrenzenden Klemmstelle, was bspw. in der übergeordneten Steuereinheit bekannt ist und berücksichtigt werden kann. Mit Hilfe einer Messung, eines Beobachters und/oder eines Parameterschätzverfahrens können Veränderungen des wenigstens einen kennzeichnenden Parameters während des Betriebs identifiziert werden, um den wenigstens einen Reglerparameter anzupassen.

In Ausgestaltung wird ein Auslegungskriterium zur Bestimmung des wenigstens einen Reglerparameters vorgegeben. Zur Auslegung von Reglerparametern sind in der Literatur verschiedene Auslegungskriterien (z.B. Symmetrisches Optimum, Wurzelortskurvenauslegung, Betragsoptimum oder Ziegler-Nichols) bekannt. Durch Vorgabe des insbesondere in der erfindungsgemäßen Recheneinheit zu verwendenden Kriteriums zur Bestimmung des wenigstens einen Reglerparameters kann die Qualität und Geschwindigkeit der Bestimmung beeinflusst werden.

Zweckmäßigerweise wird der wenigstens eine Reglerparameter in Abhängigkeit von einer Regelabweichung und/oder einer Sollwertänderung und/oder einer Vorgabe eines Maschinenzustands bestimmt. Diese Abhängigkeit kann beispielsweise auf das Auslegungskriterium oder den weiter oben erläuterten Gewichtungsfaktor Einfluss nehmen. Aufgrund der Tatsache, dass im Normalbetrieb einer entsprechenden Maschine in der Regel keine Sollwertänderungen mehr erfolgen, wird in der Praxis oft eine Optimierung auf das Störverhalten, d.h. das Verhalten auf Änderungen des Istwerts bzw. bei an der Regelstrecke angreifenden Störgrößen, parametriert. Im Falle einer Optimierung von Reglerparametern in Bezug auf das Störverhalten ist das Verhalten der Regelung in Reaktion auf Änderungen der Führungsgröße (Sollwert) durch die dann gewählte Parametrierung der Regler jedoch nicht optimal. Dies kann zu einer verringerten Dynamik oder zu einer Schwingneigung des Regelkreises führen. Im Ergebnis bedeutet dies, dass bei Optimierung auf das Störverhalten, bei dem Störungen möglichst optimal ausgeregelt werden sollen, ein wesentlich schlechteres Systemverhalten (z.B. eine Schwingneigung des Systems) im Führungsverhalten die Folge sein kann. Beispielhaft sei hier z.B. der Einrichtvorgang einer Druckmaschine genannt. Während dieses Vorgangs werden typischerweise durch einen Bediener der Maschine Sollwerte verändert und das Ergebnis wird durch Beobachtung bzw. Messung an der Regelstrecke dem Bediener zugänglich gemacht. Während des Einrichtens müssen im Verhältnis zum späteren Maschinenlauf oft relativ große Verstellungen durchgeführt werden. Bei einer Optimierung auf Störverhalten hat dies oft eine große Wartezeit zur Folge, bis die durchgeführte Sollwertänderung nach Beendigung der Einschwingvorgänge am Streckenausgang stabil erscheint, d.h. beobachtbar wird. Im späteren Maschinenverlauf sind die Sollwertänderungen meist eher gering bzw. von geringerer Dynamik, sodass hier die Dauer der Einschwingvorgänge eher von untergeordneter Relevanz ist. In Abhängigkeit vom Maschinenzustand können daher unterschiedliche Reglereinstellungen vorteilhaft sein.

Durch die bevorzugte Lösung ist es möglich, Reglerparameter in Abhängigkeit von dem aktuellen Betriebszustand zu bestimmen.

Vorteilhafterweise beinhaltet wenigstens eine konstante Totzeit eine Datenübertragungszeit von einem Sensor zu einer Recheneinheit, eine Messzeit bzw. Rechenzeit eines Sensors und/oder eine Rechenzeit einer Recheneinheit. Bei einer als Druckmaschine, insbesondere Tiefdruckmaschine, ausgestalteten Bearbeitungsmaschine sind die Bahnspannungssensoren üblicherweise in einer gewissen Entfernung von dem zuständigen Steuergerät angeordnet. Eine vorteilhafterweise zu berücksichtigende Totzeit ergibt sich demnach aus der Übertragungszeit zwischen einem Sensor und der Recheneinheit, an die der Sensor angeschlossen ist. Die Übertragung der Messwerte von den Sensoren zu den Steuergeräten kann beispielsweise über ein Netzwerk oder über einen Feldbus erfolgen. Eine weitere, vorteilhafterweise zu berücksichtigende Totzeit ergibt sich aus einer Messzeit eines Sensors bis zur Bereitstellung des Messsignals an einem Sensorausgang. Schließlich beinhaltet auch eine verwendete Recheneinheit eine Totzeit, die sich durch die Zeitspanne zwischen dem Empfang des Messwertes vom Sensor und der Ausgabe des Stellwertes an die Regelstrecke definiert. Die Summe der konstanten Totzeiten liegt typischerweise im Bereich von 10 - 200 ms. Es ist zweckmäßig, wenn eine oder alle der genannten Totzeiten von außen eingebbar, selbstständig ermittelbar oder über ein Bussystem abfragbar sind. Datenübertragungszeiten können beispielsweise unter der Verwendung von Zeitsynchronisationsverfahren ermittelt werden. Messzeiten und Rechenzeiten können gemessen werden.

Es bietet sich an, wenigstens eine geschwindigkeitsabhängige Totzeit abhängig von einer Abschnittslänge und einer Bahngeschwindigkeit zu modellieren. Eine geschwindigkeitsabhängige Totzeit ergibt sich beispielsweise dadurch, dass ein Stellbefehl der Recheneinheit bzw. des Reglers nicht sofort wirkt. Beispielsweise erfolgt eine Geschwindigkeitsverstellung eines Zylinders nicht sprunghaft, sondern wird über die Beschleunigung des Druckzylinders rampenförmig verteilt. Dadurch erhält man eine weiche Verstellung, die den Druckprozess bzw. Bahntransport nur wenig beeinflusst. Diese rampenförmige Verteilung einer Verstellung kann beispielsweise als Totzeit modelliert werden. Des Weiteren ergeben sich geschwindigkeitsabhängige Totzeiten durch die zeitdiskrete Abtastung des Ereignisses des gesteuerten Reglers. Beispielsweise könnte der Regler an einer Druckmaschine nur einmal pro Druckzylinderumdrehung einen neuen Messwert zur Ermittlung der Regelabweichung erhalten. Eine oder beide bisher genannte Totzeiten können abhängig von einer Abschnittslänge und einer Bahngeschwindigkeit modelliert werden, wobei sich insbesondere eine Proportionalität zum Quotienten aus Abschnittslänge und Bahngeschwindigkeit anbietet.

Gemäß einer vorteilhaften Ausführungsform der Erfindung werden die wenigstens eine konstante und/oder die wenigstens eine geschwindigkeitsabhängige Totzeit in einem Regelkreisglied bzw. einer Summen-Totzeit zusammengefasst. Es bietet sich an, dieses Regelkreisglied beispielsweise als PT1-Glied zu modellieren. Auf diese Weise können alle berücksichtigten Totzeiten als Summen-Totzeit innerhalb des Regelkreises berücksichtigt werden, was die Modellierung des Regelkreises besonders vereinfacht. Je nach Ausführungsform der Erfindung gehen somit in das Summen-Totzeitglied eine Warenbahngeschwindigkeit, eine Abschnittslänge, d.h. die Länge zwischen zwei Klemmstellen, eine Datenübertragungszeit von einem Sensor zu einer Recheneinheit, eine Messzeit eines Sensors und/oder eine Rechenzeit einer Recheneinheit ein. Diese Ausgestaltung der Erfindung bietet den Vorteil, dass es sich bei sämtlichen eingehenden Größen entweder um geometrische oder physikalische Parameter der Bearbeitungsmaschine, die nur einmalig bestimmt werden müssen, oder um Parameter wie z.B. die Warenbahngeschwindigkeit, die innerhalb der Maschine bekannt sind bzw. leicht bestimmt werden können, handelt. Die Summen-Totzeit kann besonders einfach zur Bestimmung des wenigstens einen Reglerparameters verwendet werden.

Es bietet sich an, die Bestimmung des wenigstens einen Reglerparameters in Abhängigkeit von einem Kennlinienfeld durchzuführen. Wie bereits weiter oben erläutert wurde, gehen in die Modellierung als Parameter nur wenige veränderliche Größen ein, wohingegen viele Größen wie z.B. Abstände, konstante Totzeiten usw. fest sind. Aus diesem Grund bietet es sich an, Kennlinienfelder in Abhängigkeit von den variablen Größen, wie z.B. Warenbahngeschwindigkeit, bereitzustellen, die beispielsweise in einer Speichereinrichtung der Recheneinheit abgelegt werden können. Auf diese Weise kann die automatische Parametrierung der Regler signifikant beschleunigt werden.

Eine erfindungsgemäße Recheneinheit, z.B. ein Steuer- bzw. Regelgerät einer Bearbeitungsmaschine, ist, insbesondere programmtechnisch, dazu eingerichtet, ein erfindungsgemäßes Verfahren durchzuführen. Die Recheneinheit weist insbesondere eine Schnittstelle auf, über die der Recheneinheit die betreffenden Parameter gemäß der obigen Beschreibung zuführbar sind. Die Parameter können z.B. manuell vorgegeben, aus einem Speicher geladen, gemessen, geschätzt, beobachtet o.ä. werden.

Auch die Implementierung des Verfahrens in Form von Software ist vorteilhaft. Dies ermöglicht besonders geringe Kosten, insbesondere wenn eine ausführende Recheneinheit noch für weitere Aufgaben genutzt wird und daher ohnehin vorhanden ist. Geeignete Datenträger zur Bereitstellung der Software sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachstehend noch.zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im folgenden unter Bezugnahme auf die Zeichnung ausführlich beschrieben.

Figurenbeschreibung

Figur 1        zeigt eine schematische Darstellung einer als Druckmaschine ausgebildeten Bearbeitungsmaschine, für die das erfindungsgemäße Verfahren geeignet ist,

Figur 2        zeigt eine schematische Darstellung eines modellierten Regelkreises für eine Bearbeitungsmaschine,

Figur 3        zeigt den Regelkreis gemäß Figur 2 in einer transformierten quasikontinuierlichen Darstellung,

Figur 4        zeigt den Regelkreis gemäß Figur 3 in einer vereinfachten Darstellung und die

Figuren 5 bis 9        zeigen Ausgestaltungen von Funktionsbausteinen zur Bestimmung von Reglerparametern gemäß unterschiedlicher bevorzugter Ausführungsformen der Erfindung.

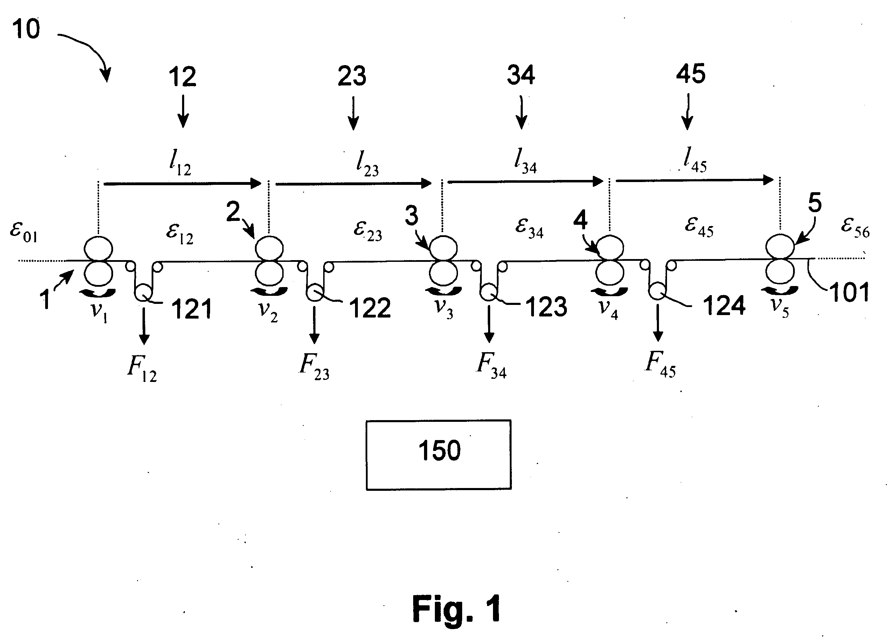

In Figur 1 ist ein schematischer Ausschnitt einer Druckmaschine 10 dargestellt, in der eine Materialbahn 101 durch fünf hier als Druckwerke 1 bis 5 ausgebildete Klemmstellen transportiert und bearbeitet wird. Zwischen jeweils zwei benachbarten Klemmstellen ist ein Bahnspannungsabschnitt ausgebildet. Beispielsweise ist ein Bahnspannungsabschnitt 12 durch die Druckwerke 1 und 2 begrenzt, ein Bahnspannungsabschnitt 23 durch die Druckwerke 2 und 3, ein Bahnspannungsabschnitt 34 durch die Druckwerke 3 und 4 und ein Bahnspannungsabschnitt 45 durch die Druckwerke 4 und 5. Statt Druckwerken können ebenso Transportwerke, wie Einzugs- oder Auszugswerk, betroffen sein.

Die Druckmaschine weist weiterhin hier als Kraftmessdosen 121 bis 124 ausgebildete Bahnspannungssensoren zur Ermittlung der Bahnspannung bzw. der Zugkraft in den jeweiligen Bahnspannungsabschnitten auf. In der gezeigten Darstellung wird die Bahnspannung über die Umfangsgeschwindigkeiten $v_1$ bis $v_5$ der Druckwerke 1 bis 5 eingestellt.

Die physikalischen Parameter, nämlich die Länge 1, die Dehnung $\varepsilon$ und die Bahnspannung bzw. Zugkraft F der einzelnen Bahnspannungsabschnitte sind in der Figur ebenfalls angegeben.

Zur Einstellung der Bahnspannung bspw. in dem Bahnspannungsabschnitt 34 sind zwei Strategien bekannt. Bei der Upstream-Strategie wird das Druckwerk 3 (und optional davorliegende Druckwerke) verstellt und bei der Downstream-Strategie wird das Druckwerk 4 verstellt. Eine Erhöhung der Geschwindigkeit der vorderen Klemmstelle bewirkt eine Verringerung der Bahnzugkraft und eine Erhöhung der Geschwindigkeit der hinteren Klemmstelle bewirkt einen Anstieg der Bahnzugkraft. Hierdurch ist zugleich ein positiver und negativer Regelsinn beschrieben. Der positive Regelsinn entspricht somit der Regelung mittels der hinteren begrenzenden Klemmstelle als Stellsignal (Downstream), da hierbei ein Anstieg des Stellsignals zugleich einen Anstieg des Ausgangssignals bewirkt. Umgekehrt veranlasst ein Anstieg der Geschwindigkeit der vorderen Klemmstelle (Upstream) ein Abfallen der Bahnzugkraft, weshalb dieses Verhalten mit dem Begriff des negativen Regelsinns beschrieben wird. Zur Durchführung der Bahnspannungsregelung werden die von den Sensoren 121 bis 124 erfassten Bahnspannungswerte einer Einrichtung zur Bahnspannungsregelung (Zugregler) innerhalb einer Steuereinheit 150 zugeführt. Der Zugregler steuert in Abhängigkeit von den Bahnspannungswerten die Geschwindigkeiten $v_1$ bis $v_5$.

Gemäß der dargestellten Ausführungsform wird der Zugregler. unter Verwendung eines erfindungsgemäßen Verfahrens automatisch parametriert.

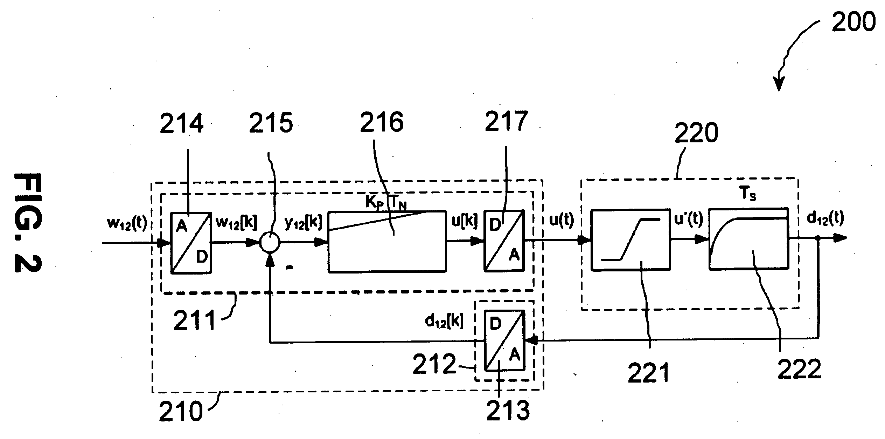

In Figur 2 ist ein unter Verwendung der erfindungsgemäßen Erkenntnisse modellierter Bahnspannungs-Regelkreis schematisch dargestellt und insgesamt mit 200 bezeichnet. Dem Regelkreis kann beispielsweise eine Druckmaschine gemäß Figur 1 zugrunde liegen, wobei bspw. die Bahnspannungsregelung in dem Abschnitt 12 betroffen ist. Aufgrund der Eigenschaften der zugrunde liegenden Bearbeitungsmaschine lässt sich der Regelkreis 200 in einen zeitdiskreten Anteil 210 und einen zeitkontinuierlichen Anteil 220 aufteilen. In dem zeitkontinuierlichen Anteil 220 befindet sich ein Glied 221, das die rampenartige Geschwindigkeitszunahme eines Druckzylinders in Reaktion auf einen Stellbefehl um u(t) modelliert. Der rampenartig modellierte Stellbefehl u'(t) wird an die Regelstrecke 222 mit der Streckenzeit $T_s$ weitergereicht.

Der zeitdiskrete Teil 210 umfasst einen Teil 211, der in einem Registerregler, beispielsweise einer SPS wie der Recheneinheit 150, enthalten ist, und einen Teil 212, der in einem Sensor, beispielsweise in dem Sensor 121, enthalten ist. Der Sensor wird durch ein Analog/Digitalglied 213 modelliert, das die kontinuierliche Regelgröße $d_{12}(t)$ (entspricht $F_{12}(t)$) als zeitdiskrete Rückführgröße $d_{12}[k]$ einem Vergleichspunkt 215 zuführt.

Der Bahnspannungsreglerteil 211 umfasst ebenfalls ein Analog/Digitalglied 214, das aus der kontinuierlichen Führungsgröße $w_{12}(t)$ die zeitdiskrete Führungsgröße $w_{12}[k]$ berechnet. Dieses Analog/Digitalglied 214 kann entfallen, falls die Führungsgröße bereits in digitaler Form in der Recheneinheit einzugeben ist. Das Vergleichsglied 215 berechnet den zeitdiskreten Regel-

fehler bzw. die Regeldifferenz $y_{12}[k]$, die dem eigentlichen Regelglied 216 zugeführt wird. Das Regelglied 216 ist beispielhaft als PI-Glied ausgebildet, denkbar sind jedoch auch viele andere Reglertypen, wie z.B. PID-Regler, Zustandsregler, usw. Aus einer zeitdiskreten Reglerausgangsgröße $u[k]$ wird in einem Digital/Analogglied 217 die zeitkontinuierliche Stellgröße $u(t)$ (entspricht z.B. $v_{12}(t)$ oder einem Feinabgleich bzw. Getriebefaktor) berechnet.

Innerhalb des Regelkreises 200 werden gemäß einer besonders bevorzugten Ausführungsform der Erfindung sowohl konstante als auch geschwindigkeitsabhängige Totzeiten berücksichtigt. Die Regelgröße $d_{12}(t)$ wird von einem Sensor erfasst, wobei eine Messzeit benötigt wird, welche als Totzeit $T_{t,SENSOR}$ berücksichtigt wird und etwa 10 - 100 ms betragen kann. Diese Totzeit ist dem Glied 213 zugehörig.

Die Rückführgröße $d_{12}[k]$ wird über eine Verbindungsleitung dem Zugregler zugeführt, was eine gewisse Übertragungszeit benötigt, welche als weitere Totzeit $T_{t,NET}$ berücksichtigt wird. Diese bewegt sich im Bereich von ca. 1 - 20 ms. Schließlich werden der Bahnspannungsfehler $y_{12}[k]$ sowie die Stellgröße $u[k]$ in dem Zugregler, beispielsweise einer SPS, berechnet, was wiederum zu einer Totzeit $T_{t,SPS}$ führt, welche ca. 1 - 20 ms beträgt.

Gemäß der beschriebenen Ausgestaltung der Erfindung werden diese konstanten Totzeiten zusätzlich zu geschwindigkeitsabhängigen Totzeiten berücksichtigt, welche üblicherweise proportional zu einem Verhältnis aus Länge und Warenbahngeschwindigkeit modelliert werden.

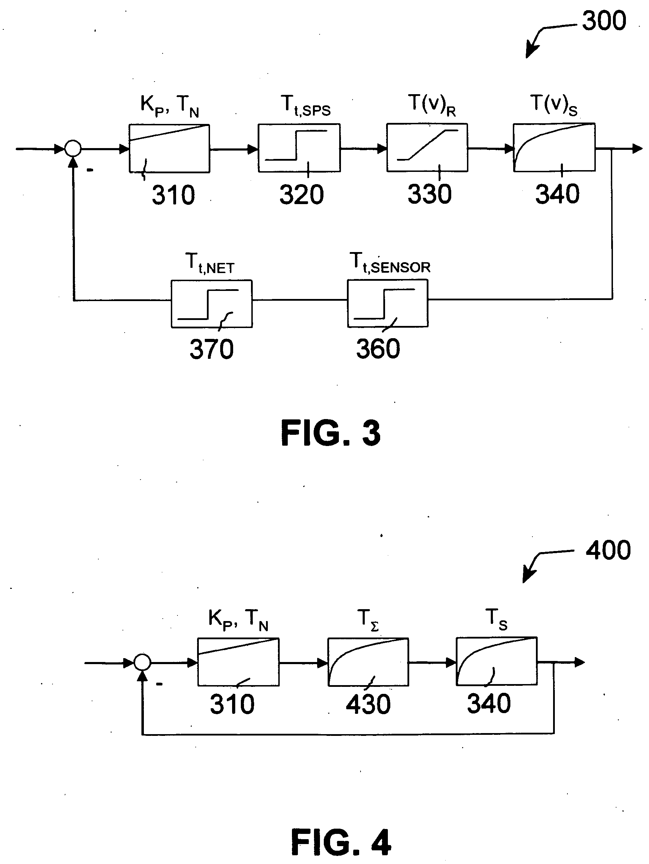

Gemäß einer weiteren bevorzugten Ausgestaltung der Erfindung können die soeben beschriebenen Totzeiten innerhalb des Regelkreises in einem Regelkreisglied zusammengefasst werden, wie es unter Bezugnahme auf Figur 3 näher beschrieben wird.

In Figur 3 ist der Regelkreis gemäß Figur 2 in einer vereinfachten Darstellung abgebildet und insgesamt mit 300 bezeichnet. In dieser Darstellung sind die einzelnen Regelkreisglieder abgebildet.

Der Regelkreis 300 umfasst ein PI-Glied 310 mit einer Regelverstärkung $K_P$ und einer Nachstellzeit $T_N$. Die konstante Totzeit, die von der Rechenzeit der Recheneinheit hervorgerufen wird, ist in einem Totzeit-Glied 320 mit der Totzeit $T_{t,SPS}$ dargestellt. Die geschwindigkeitsabhängige Totzeit $T(v)_R$, die von den Rampenverhalten der Stellgröße hervorgerufen wird, ist in einem Glied 330 modelliert. Das Streckenverhalten mit den geschwindigkeitsabhängigen Streckenzeiten $T(v)_s$ ist schließlich in einem PT1-Glied 340 modelliert.

In der Rückführung ist die durch die Messzeit des Sensors hervorgerufene konstante Totzeit $T_{t,SENSOR}$ in einem Totzeit-Glied 360 modelliert. Die durch die Datenübertragung hervorgerufene konstante Totzeit $T_{t,NET}$ ist in einem Totzeit-Glied 370 modelliert. Weiterhin kann die entstehende zeitliche Verzögerung, die durch die Wandlung des kontinuierlichen in ein zeitdiskretes und des zeitdiskreten Signals in ein kontinuierliches Signal erzeugt wird berücksichtigt werden. In der Regel wird der Einfluss des sogenannten Abtasthalteglieds mit einer halben Abtastzeit im Regelkreis berücksichtigt.

Gemäß einer weiteren bevorzugten Ausführungsform der Erfindung können die soeben beschriebenen Totzeit-Glieder 320, 330, 360 und 370 in einem Regelkreisglied zusammengefasst werden, wie es unter Bezugnahme auf Figur 4 dargestellt ist. In Figur 4 ist der Regelkreis gemäß Figur 3 in einer weiteren vereinfachten Darstellung abgebildet und insgesamt mit 400 bezeichnet.

Der Regelkreis 400 umfasst nunmehr das PI-Glied 310 sowie die Regelstrecke 340 aus Figur 3. Die Totzeit-Glieder aus Figur 3 sind in einem Regelkreisglied 430 zusammengefasst, welches durch eine Summen-Totzeit $T_S$ gekennzeichnet ist. Das Regelkreisglied 430 kann mittels PT1-Verhalten angepasst werden. Es versteht sich, dass daneben auch andere regeltechnische Anpassungen möglich sind. Die Stellung des Regelkreisgliedes 430 innerhalb des Regelkreises 400 ist vom zuständigen Fachmann wählbar. Beispielsweise kann das Regelkreisglied 430 auch in der Rückführung angeordnet werden, was lediglich einen Einfluss auf die Führungsübertragungsfunktion, jedoch keinen Einfluss auf die Reglerauslegung hätte. Die gemäß der bevorzugten Ausgestaltung verwendete Summen-Totzeit $T_S$ ist vorteilhaft zur Bestimmung der Reglerparameter geeignet, wie es nachfolgend erläutert wird.

Die Reglerparameter $K_P$ und $T_N$ des PI-Glied 310 hängen gemäß des gewählten Beispiels von der Bahnbreite $b$ und der Bahndicke $d$ der Warenbahn 101, der Bahnlänge $l_{12}$ des zu regelnden Abschnittes zwischen den benachbarten Klemmstellen 1 und 2, dem Bahnmaterial sowie den Verzögerungszeiten bzw. Totzeiten ab. Ausgehend von einem PI-Regelglied mit der Übertragungsfunktion $G(s) = K_P (1+1/(T_N s))$ können nachfolgende bevorzugte Reglerparameterzusammenhänge angegeben werden:

Die Proportionalverstärkung $K_P$ ergibt sich in Abhängigkeit von E-Modul $E$, Bahnquerschnitt $A$, Abschnittslänge $l$, Bahngeschwindigkeit $v$ und Ersatzzeitkonstanten $T_E$ zu

$$K_P \sim \frac{l}{v \cdot T_E \cdot E \cdot A}$$

Die Nachstellzeit $T_N$ ist proportional zur Ersatzzeitkonstanten $T_E$ von Totzeiten, Signalglättungen usw., welche im gewählten Beispiel durch die weiter oben angegebene Summen-Totzeit $T_S$ beschrieben werden kann, $T_N \sim$

$$T_E = T_S.$$

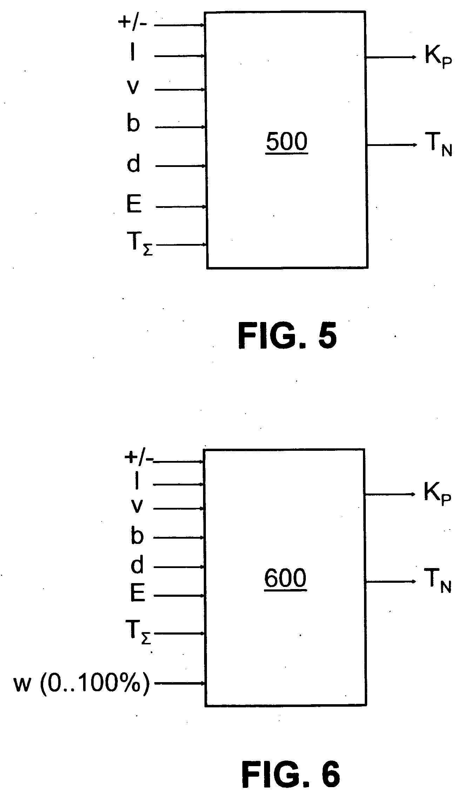

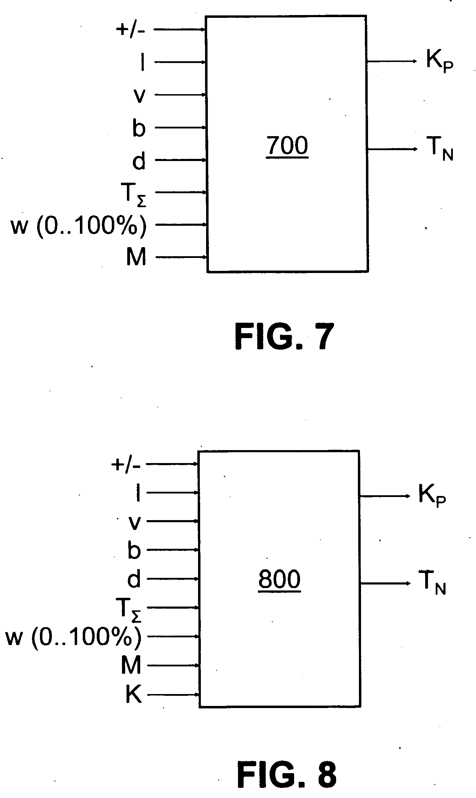

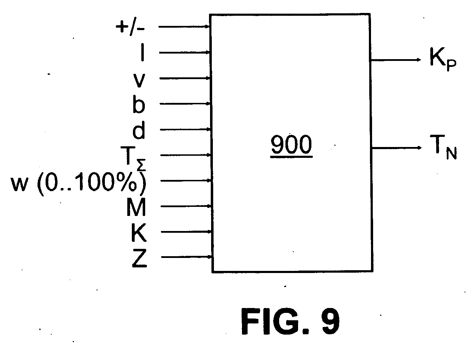

Eine Auswahl von bevorzugten Algorithmen (z.B. in SPS-Funktionsbausteinen programmiert) zur Beschreibung der Reglerparameterbestimmung wird nachfolgend zusammenhängend und übergreifend anhand der Figuren 5 bis 9 beschrieben, wobei gleiche Elemente mit gleichen Bezugszeichen versehen sind.

In den Figuren 5 bis 9 sind Funktionsbausteine 500, 600, 700, 800 und 900 zur Bestimmung der Reglerparameter $K_P$ und $T_N$ dargestellt. Es sind jeweils auf der linken Seite unterschiedliche Eingangsgrößen vorhanden, die, gegebenenfalls auch optional, in die Bestimmung der Reglerparameter einfließen.

Bevorzugterweise ist vorgesehen, den Regelsinn, der weiter oben im Zusammenhang mit der Upstream- und der Downstream-Einstellung erläutert wurde, optional dem Funktionsbaustein zuzuführen. Der Regelsinn ist mit +/- in den Figuren bezeichnet. Der Regelsinn beeinflusst im Wesentlichen nur das Vorzeichen der Reglerausgangsgröße und kann somit auch an einer anderen Stelle innerhalb des Regelkreises zugeführt werden.

Weiterhin ist vorgesehen, die Bahnabschnittslänge 1, die Bahngeschwindigkeit v, die Bahnbreite b, die Bahndicke d sowie die Summen-Totzeit $T_S$ jedem der dargestellten Funktionsbausteine zuzuführen.

Den Funktionsbausteinen 500 und 600 wird darüber hinaus noch der Elastizitätsmodul E der Warenbahn zugeführt.

Gemäß einer anderen bevorzugten Ausgestaltung, die durch den Funktionsbaustein 600 repräsentiert wird, wird zur Bestimmung der Reglerparameter auch ein Gewichtungsfaktor w verwendet, der z.B. zwischen 0 und 100 % liegen kann (denkbar sind auch Werte größer 100%). Wie weiter oben erläutert, beeinflusst der Gewichtungsfaktor w die sogenannte Reglerschärfe.

Eine weitere bevorzugte Ausführungsform wird durch den Funktionsbaustein 700 repräsentiert. Der Funktionsbaustein 700 unterscheidet sich vom Funktionsbaustein 600 dadurch, dass anstelle des Elastizitätsmoduls E der Materialtyp M zugeführt wird, da innerhalb des Funktionsbausteins 700 eine Datenbank vorgesehen ist, in der eine Anzahl von Elastizitätsmodulwerten für bestimmte Materialtypen abgelegt ist. Der Anwender muss somit bei der Reglerparametrierung nur noch den Materialtyp angeben.

Der Funktionsbaustein 800 unterscheidet sich vom Funktionsbaustein 700 durch die zusätzliche Möglichkeit der Angabe des Auslegungskriteriums K.

Dem Funktionsbaustein 900 kann schließlich zusätzlich eine Information Z betreffend den Maschinenzustand zugeführt werden. Z kann beispielsweise angeben, dass ein Produktionszustand oder ein Einrichtzustand vorliegt.

Es versteht sich, dass in den dargestellten Figuren nur beispielhafte Ausführungsformen der Erfindung dargestellt sind. Daneben ist jede andere Ausführungsform denkbar, ohne den Rahmen dieser Erfindung zu verlassen.

**Patentansprüche**

1. Verfahren zur Bestimmung wenigstens eines Reglerparameters (Kp, $T_N$) eines Regelglieds (216, 310) in einem Bahnspannungs-Regelkreis (200; 300; 400) für eine Bearbeitungsmaschine (10) zur Bearbeitung einer Warenbahn (101), insbesondere wellenlose Druckmaschine,
   **dadurch gekennzeichnet, dass** der wenigstens eine Reglerparameter ($K_P$, $T_N$) der Gruppe Proportionalverstärkung $K_P$, Integralverstärkung $K_I$, Differentialverstärkung $K_D$, Nachstellzeit $T_N$, Vorhaltezeit Tv und Verzögerung T angehört, wobei er in Abhängigkeit von wenigstens einem die Warenbahn (101) kennzeichnenden Parameter (E, b, d, M), wenigstens einem die Bearbeitungsmaschine kennzeichnenden Parameter (v, 1) und wenigstens einer Totzeit ($T_{t,SENSOR}$, $T_{t,NET}$, $T_{t,SPS}$, $T(v)_R$, Ts) bestimmt wird.

2. Verfahren nach Anspruch 1,
   wobei die Bestimmung des wenigstens einen Reglerparameters ($K_P$, $T_N$) während eines Bearbeitungsprozesses regelmäßig oder getriggert durchgeführt wird.

3. Verfahren nach Anspruch 1 oder 2,
   wobei der wenigstens eine Reglerparameter ($K_P$, $T_N$) in Abhängigkeit von einem vorgebbaren Gewichtungsfaktor (w) bestimmt wird.

4. Verfahren nach einem der vorstehenden Ansprüche, wobei ein Wert für wenigstens einen die Warenbahn (101) kennzeichnenden Parameter (E) einer Datenbank entnommen wird.

5. Verfahren nach einem der vorstehenden Ansprüche, wobei ein Wert für wenigstens einen die Warenbahn (101) kennzeichnenden Parameter (E) und/oder wenigstens einen die Bearbeitungsmaschine kennzeichnenden Parameter (v, 1) gemessen, geschätzt oder mittels regelungstechnischer Beobachtung bestimmt wird.

6. Verfahren nach einem der vorstehenden Ansprüche, wobei ein Auslegungskriterium (K) zur Bestimmung des wenigstens einen Reglerparameters ($K_P$, $T_N$) vorgegeben wird.

7. Verfahren nach einem der vorstehenden Ansprüche, wobei der wenigstens eine Reglerparameter ($K_P$, $T_N$) in Abhängigkeit von einer Regelabweichung und/oder einer Sollwertänderung und/oder einer Vorgabe eines Maschinenzustands (Z) bestimmt wird.

8. Verfahren nach einem der vorstehenden Ansprüche, wobei der wenigstens eine Reglerparameter ($K_P$, $T_N$) in Abhängigkeit von wenigstens einer konstanten Totzeit ($T_{t,SENSOR}$, $T_{t,NET}$, $T_{t,SPS}$) bestimmt wird, die eine Datenübertragungszeit ($T_{t,NET}$) von einem Sensor (121, 122, 123, 124) zu einer Recheneinheit (150), eine Messzeit ($T_{t,\,SENSOR}$) eines Sensors (121, 122, 123, 124) und/oder eine Rechenzeit ($T_{t,SPS}$) einer Recheneinheit (150) beinhaltet.

9. Verfahren nach einem der vorstehenden Ansprüche, wobei der wenigstens eine Reglerparameter ($K_P$, $T_N$) in Abhängigkeit von wenigstens einer geschwindigkeitsabhängigen Totzeit ($T(v)R$) bestimmt wird.

10. Verfahren nach Anspruch 8 und 9, wobei die wenigstens eine konstante ($T_{t,SENSOR}$, $T_{t,NET}$, $T_{t,SPS}$) und/oder die wenigstens eine geschwindigkeitsabhängige Totzeit ($T(v)_R$) zu einer Summen-Totzeit ($T\Sigma$) zusammengefasst werden.

11. Recheneinheit (150), die dazu eingerichtet ist, ein Verfahren nach einem der vorstehenden Ansprüche durchzuführen.

**Claims**

1. Method for determining at least one controller parameter ($K_P$, $T_N$) for a control element (216, 310) in a web tension control loop (200; 300; 400) for a handling machine (10) for handling a product web (101), particularly a shaftless printing machine, **characterized in that** the at least one controller parameter ($K_P$, $T_N$) belongs to the group of proportional gain $K_P$, integral gain $K_I$, differential gain $K_D$, adjustment time $T_N$, lead time $T_V$ and delay T, wherein it is determined on the basis of at least one parameter (E, b, d, M) that denotes the product web (101), at least one parameter (v, 1) that denotes the handling machine and at least one dead time ($T_{t,SENSOR}$, $T_{t,NET}$, $T_{t,PLC}$, $T(V)_R$, $T_S$).

2. Method according to Claim 1, wherein the at least one controller parameter ($K_P$, $T_N$) is determined during a handling process on a regular basis or on a triggered basis.

3. Method according to Claim 1 or 2, wherein the at least one controller parameter ($K_P$, $T_N$) is determined on the basis of a prescribable weighting factor (w).

4. Method according to one of the preceding claims, wherein a value for at least one parameter (E) that denotes the product web (101) is taken from a database.

5. Method according to one of the preceding claims, wherein a value for at least one parameter (E) that denotes the product web (101) and/or at least one parameter (v, 1) that denotes the handling machine is measured, is estimated or is determined by means of control-engineering observation.

6. Method according to one of the preceding claims, wherein a design criterion (K) is prescribed for determining the at least one controller parameter ($K_P$, $T_N$).

7. Method according to one of the preceding claims, wherein the at least one controller parameter ($K_P$, $T_N$) is determined on the basis of a control error and/or a setpoint value change and/or a default for a machine state (Z).

8. Method according to one of the preceding claims, wherein the at least one controller parameter ($K_P$, $T_N$) is determined on the basis of at least one constant dead time ($T_{t,SENSOR}$, $T_{t,NET}$, $T_{t,PLC}$) which contains a data transmission time ($T_{t,NET}$) from a sensor (121, 122, 123, 124) to a computation unit (150), a measurement time ($T_{t,SENSOR}$) for a sensor (121, 122, 123, 124) and/or a computation time ($T_{t,PLC}$) for a computation unit (150).

9. Method according to one of the preceding claims, wherein the at least one controller parameter ($K_P$, $T_N$) is determined on the basis of at least one speed-dependent dead time ($T(v)_R$).

10. Method according to Claims 8 and 9, wherein the at least one constant dead time ($T_{t,SENSOR}$, $T_{t,NET}$, $T_{t,PLC}$) and/or the at least one speed-dependent dead time ($T(v)_R$) are combined to form a total dead time ($T\Sigma$).

11. Computation unit (150) which is set up to carry out a method according to one of the preceding claims.

**Revendications**

1. Procédé de détermination d'au moins un paramètre de régulateur ($K_P$, $T_N$) d'un circuit de régulation (216, 310) dans un circuit de régulation de bande (200 ; 300 ; 400) destiné à une machine de traitement (10) pour traiter une bande (101), notamment destiné à une machine d'impression sans arbre, **caractérisé en ce que** l'au moins un paramètre de régulateur ($K_P$, $T_N$) appartient au groupe comprenant l'amplification proportionnelle ($K_P$), l'amplification intégrale ($K_I$), l'amplification différentielle $K_D$, le temps de réglage $T_N$, le temps de maintien $T_V$ et le retard T, dans lequel il est déterminé en fonction d'au moins un paramètre (E, b, d, M) caractérisant la bande (101), d'au moins un paramètre (v, 1) caractérisant la machine de traitement et d'au moins un temps mort ($T_{t,SENSOR}$, $T_{t,NET}$, $T_{t,SPS}$, $T(v)_R$, $T_S$).

2. Procédé selon la revendication 1, dans lequel la détermination de l'au moins un paramètre de régulateur ($K_P$, $T_N$) est effectuée régulièrement ou de manière déclenchée pendant un processus de traitement.

3. Procédé selon la revendication 1 ou 2, dans lequel l'au moins un paramètre de régulateur ($K_P$, $T_N$) est déterminé en fonction d'un facteur de pondération (w) pouvant être prédéterminé.

4. Procédé selon l'une quelconque des revendications précédentes, dans lequel
   une valeur de l'au moins un paramètre (E) caractérisant la bande (101) est obtenue à partir d'une banque de données.

5. Procédé selon l'une quelconque des revendications précédentes,
   dans lequel une valeur d'au moins un paramètre (E) caractérisant la bande (101) et/ou d'au moins un paramètre (v, 1) caractérisant la machine de traitement est mesurée, estimée ou déterminée au moyen d'une observation effectuée par un système de régulation.

6. Procédé selon l'une quelconque des revendications précédentes,
   dans lequel un critère d'interprétation (K) est prédéterminé pour déterminer l'au moins un paramètre de régulateur ($K_P$, $T_N$).

7. Procédé selon l'une quelconque des revendications précédentes,
   dans lequel l'au moins un paramètre de régulateur ($K_P$, $T_N$) est déterminé en fonction d'un écart de régulation et/ou d'une modification d'une valeur nominale et/ou d'un objectif d'un état (Z) de la machine.

8. Procédé selon l'une quelconque des revendications précédentes,
   dans lequel l'au moins un paramètre de régulateur ($K_P$, $T_N$) est déterminé en fonction d'au moins un temps mort constant ($T_{t,SENSOR}$, $T_{t,NET}$, $T_{t,SPS}$) qui contient un temps de transmission de données ($T_{t,NET}$) d'un capteur (121, 122, 123, 124) à une unité de calcul (150), un temps de mesure ($T_{t,SENSOR}$) d'un capteur (121, 122, 123, 124) et/ou un temps de calcul ($T_{t,SPS}$) d'une unité de calcul (150).

9. Procédé selon l'une quelconque des revendications précédentes,
   dans lequel l'au moins un paramètre de régulateur ($K_P$, $T_N$) est déterminé en fonction d'au moins un temps mort ($T(v)R$) dépendant de la vitesse.

10. Procédé selon la revendication 8 et 9,
    dans lequel l'au moins un temps mort constant ($T_{t,SENSOR}$, $T_{t,NET}$, $T_{t,SPS}$) et/ou l'au moins un temps mort dépendant de la vitesse ($T(v)_R$) est/sont combiné(s) en un temps mort total ($T\Sigma$).

11. Unité de calcul (150) conçue pour mettre en oeuvre un procédé selon l'une quelconque des revendications précédentes.

**Fig. 1**

EP 2 246 760 B1

**FIG. 2**

FIG. 3

FIG. 4

+/- ——→
I ——→
v ——→
b ——→ **500** ——→ $K_P$
d ——→
E ——→ ——→ $T_N$
$T_\Sigma$ ——→

## FIG. 5

+/- ——→
I ——→
v ——→
b ——→
d ——→ **600** ——→ $K_P$
E ——→
$T_\Sigma$ ——→ ——→ $T_N$
w (0..100%) ——→

## FIG. 6

FIG. 7

FIG. 8

**FIG. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10345593 A1
- DE 3605168 A1
- EP 1790601 A2
- DE 102008035639
- DE 102007049670 A1
- DE 10225824 A1
- DE 10322098 A1